Europäisches Patentamt

European Patent Office

Office européen des brevets

(11) Veröffentlichungsnummer: **0 198 178 B1**

# EUROPÄISCHE PATENTSCHRIFT

(45) Veröffentlichungstag der Patentschrift: **11.09.91**

(51) Int. Cl.⁵: **H04M 3/22**, H04M 3/42

(21) Anmeldenummer: **86102185.5**

(22) Anmeldetag: **20.02.86**

(54) **Verfahren zur Prüfung von Fernsprechapparaten, Leitungswegen und Teilen der Steuerung von Fernsprechvermittlungsanlagen, insbesondere Fernsprechnebenstellenanlagen.**

(30) Priorität: **10.04.85 DE 3512787**

(43) Veröffentlichungstag der Anmeldung:
**22.10.86 Patentblatt 86/43**

(45) Bekanntmachung des Hinweises auf die
Patenterteilung:
**11.09.91 Patentblatt 91/37**

(84) Benannte Vertragsstaaten:
**AT BE FR GB IT LU NL**

(56) Entgegenhaltungen:
**DE-A- 3 026 031**
**DE-A- 3 133 935**

**BELL LABORATORIES RECORD, Band 60, Nr. 10, Dezember 1982, Seiten 273-277, Murray Hill, US; G.E. LARSON et al.: "One-person testing for data sets and terminals"**

**PATENT ABSTRACTS OF JAPAN, Band 9, Nr. 143 (E-322)[1866], 18. Juni 1985; & JP-A-60 25 361**

(73) Patentinhaber: **TELENORMA GMBH**
**Mainzer Landstrasse 128-146**
**W-6000 Frankfurt/Main(DE)**

(72) Erfinder: **Ernst, Ralf**
**Am Eichenbühl 87**
**W-6074 Rödermark(DE)**
Erfinder: **Korn, Peter, Dipl.-Ing. (FH)**
**Bahnebredde 29**
**W-4600 Dortmund 50(DE)**

## Beschreibung

Die Erfindung betrifft ein Verfahren zur Prüfung von Fernsprechapparaten, Leitungswegen und Teilen der Steuerung von Fernsprechvermittlungsanlagen, insbesondere Fernsprechnebenstellenanlagen nach dem Oberbegriff des Patentanspruchs 1.

Aus der DE-PS 30 26 031 ist ein Verfahren zur Abwicklung von Prüfabläufen bei der Funktionsprüfung eines im Teilnehmeranschlußapparat einer Fernsprechvermittlungsanlage, insbesondere einer rechnergesteuerten Fernsprechnebenstellenanlage angeordneten Wahlzifferngebers bekannt. Hierzu ist es erforderlich, daß die in der Fernsprechvermittlungsanlage vorhandenen Verbindungssätze zusätzlich für die Durchführung der vorgesehenen Prüffunktionen ausgelegt sind. Dies bedeutet, daß in jedem einzelnen Verbindungssatz ein beträchtlicher Mehraufwand erforderlich ist, wodurch sich insgesamt gesehen die Fernsprechvermittlungsanlage erheblich verteuert. Bei der Übermittlung einer vorbestimmten, den Prüfungsfall kennzeichnenden Zifferninformation wird die nachfolgend eingewählte Ziffer hinsichtlich ihrer ordnungsgemäßen, den Ziffernwert bestimmenden Zusammensetzung überprüft. Das Prüfergebnis wird als am Teilnehmeranschluß akustisch registrierberes Zeichen zu diesem übertragen. Dabei muß der die Prüfung einleitende Fernsprechteilnehmer ein zusätzliches Zeichen richtig interpretieren. Bei einer derartig einfachen Zeichengabe ist es nur möglich eine Ja- Nein-Aussage abzugeben, so daß der Teilnehmer lediglich weiß, ob die einzelne jeweils gewählte Ziffer richtig empfangen worden ist. Bei diesem Verfahren ist es nicht möglich, über das Prüfen von Wahlziffern hinausgehende Informationen zu erhalten.

Die Aufgabe der Erfindung besteht darin, ein Verfahren zur Prüfung von Fernsprechapparaten, Leitungswegen und Teilen der Steuerung von Fernsprechvermittlungsanlagen, insbesondere Fernsprechnebenstellenanlagen anzugeben, wobei in den einzelnen Verbindungssätzen keinerlei Vorleistungen erforderlich sind, und wobei der gesamte Prüfaufwand an zentraler Stelle konzentriert ist. Die Aufgabe der Erfindung besteht außerdem darin, daß bei diesem Verfahren eine Vielzahl von Prüfungsergebnissen in einer solchen Form ausgegeben werden, daß sie von der die Prüfung vornehmenden Person unmittelbar verstanden werden können. Die Lösung dieser Aufgabe erfolgt mit einer Merkmalskombination, wie sie im Patentanspruch 1 angegeben ist.

Damit wird in vorteilhafter Weise erreicht, daß die den zu prüfunden Teilnehmeranschluß betreffenden Informationen vollständig in klar verständlicher Form der die Prüfung durchführenden Person mitgeteilt werden. Zu dieser Prüfung ist nur eine Person erforderlich, die in relativ kurzer Zeit eine größere Menge von Fernsprechapparaten, Teilnehmeranschlußschaltungen, Leitungswegen und Teilen der Steuerung prüfen kann. Da bei diesem Prüfungsverfahren nur eine zentrale Stelle angesteuert wird, ist es nicht erforderlich, Verbindungsübertragungen und andere dezentrale Einrichtungen mit zusätzlichen Schaltmitteln für die Prüfung auszustatten. Bei der Prüfung kann durch bekannte Maßnahmen wie Sperren von Verbindungswegen erreicht werden, daß die Prüfverbindung über verschiedene Wege eines Raumvielfachkopplers verläuft, so daß alle Koppelwege zumindest einmal mit einer Prüfverbindung belegt werden. Die beim Aufbauen von Prüfverbindungen erforderlichen Bedienungsprozeduren sind sehr einfach, und die automatische Ansage der Teilnehmerinformationen ist so gestaltet, daß die Angaben leicht mit vorhandenen Listen verglichen werden können, um ihre Richtigkeit zu prüfen. Es ist außerdem leicht möglich, den jeweils aktuellen Stand eines Teilnehmeranschlusses sofort zu erfahren, wenn irgendwelche Unklarheiten bestehen sollten. Weiterbildungen der Erfindung ergeben sich aus den Unteransprüchen.

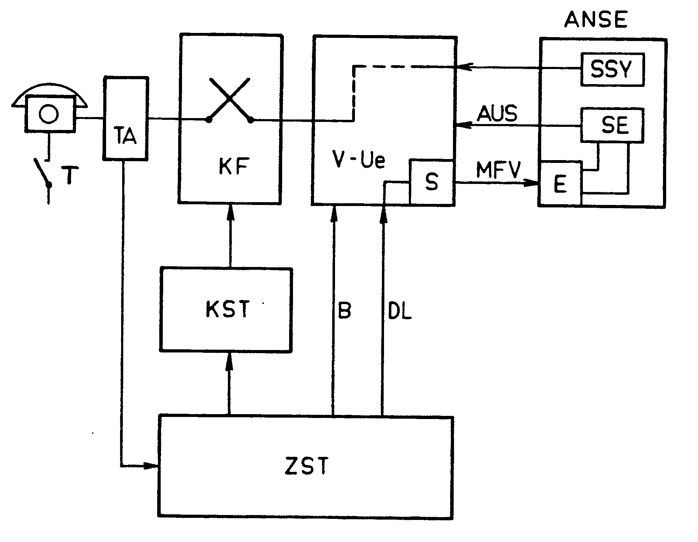

Ein Ausführungsbeispiel der Erfindung wird nachfolgend anhand einer Zeichnung näher erläutert. In der Zeichnung ist das Prinzipschaltbild einer Fernsprechvermittlungsanlage dargestellt, wobei es sich auch um eine Fernsprechnebenstellenanlage handeln kann. Eine solche Fernsprechvermittlungsanlage besteht im wesentlichen aus einer zentralen Steuerung ZST, einem Koppelfeld KF und Teilnehmeranschlüssen TA sowie Verbindungsübertragungen VUe, die über das Koppelfeld KF wahlweise miteinander verbunden werden können. Um die Verbindungen innerhalb des Koppelfeldes KF durchschalten zu können, ist eine Koppelfeldsteuerung KST vorgesehen, die von der zentralen Steuerung ZST die notwendigen Einstellbefehle erhält und damit Durchschaltebefehle für die Koppelpunkte erzeugt. In der Zeichnung sind nur die für die Erfindung notwendigen Einzelteile dargestellt.

Ein Prüfvorgang beginnt damit, daß nach Abheben des Handapparates am Fernsprechapparat des zu prüfenden Teilnehmeranschlusses TA eine Funktionstaste T gedrückt wird. Bei der Abfrage des Schaltkriteriums erfährt die zentrale Steuerung, daß eine Prüfverbindung aufzubauen ist. In Abhängigkeit davon, welches Wahlverfahren bei dem betreffenden Teilnehmeranschluß TA angewendet wird, kann das für den Aufbau einer Prüfverbindung vorgesehene, durch die Betätigung der Funktionstaste T bewirkte Schaltkriterium aus einer Erdung der Teilnehmeranschlußleitung, aus einer kurzzeitigen Schleifenunterbrechung oder aus einem Tonfrequenzsignal bestehen. Diese Schaltkriterien werden durch ohnehin in der Fernsprechvermittlungsanlage vorhandene Einrichtungen erfaßt und der zentralen Steuerung ZST zugeführt. Dies geschieht entweder durch direkte Abtastung der Teilnehmeranschlüsse TA oder mit Hilfe von nicht dargestellten Wahlaufnahmesätzen.

Der zu prüfende Teilnehmeranschluß TA wird mit einer Verbindungsübertragung VUe verbunden, an die eine Ansageeinrichtung ANSE angeschlossen ist. Falls die Ansageeinrichtung ANSE auch für andere Ansagen verwendet wird, und nicht nur speziell für die Prüfvorgänge zur Verfügung steht, wird mit einem besonderen Belegungssignal B, das von der zentralen Steuerung ZST ausgeht, der Verbindungsübertragung VUe mitgeteilt, daß es sich um einen Prüfvorgang handelt. In der Verbindungsübertragung VUe befindet sich eine Sendeeinrichtung S, die über einen besonderen Leitungsweg direkt mit einer in der Ansageeinrichtung ANSE befindlichen Empfangseinrichtung E verbunden ist. Über diesen Leitungsweg wird der Ansageeinrichtung ANSE mit Hilfe von bei Tastwahl nach dem Mehrfrequenzverfahren MFV angewendeten Tonfrequenzen mitgeteilt, welche Ansagetexte abzugeben sind. Zu diesem Zweck werde über eine oder mehrere Datenleitungen DL von der zentralen Steuerung ZST aus alle den mit der Verbindungsübertragung VUe verbundenen Teilnehmeranschluß TA betreffende Informationen in die Verbindungsübertragung VUe übertragen. Dabei findet eine Zwischenspeicherung statt, wenn diese Informationsübertragung schneller vonstatten geht, als die Informationen weitergegeben werden können zur Ansageeinrichtung ANSE.

Mit den auf diese Weise empfangenen Informationen ist die Ansageeinrichtung ANSE in der Lage, vorgegebene Texte zu generieren, wozu eine Steuereinrichtung SE und eine Sprachsyntheseeinrichtung SSY vorgesehen sind. Dabei kann eine bestimmte Reihenfolge vorgegeben sein, so daß eine derartige Ansage wie folgt lauten könnte:
"Der Anschluß hat die Rufnummer 32 45, die Berechtigungen sind Fernwahl 1, Aufschalten, Sammelanschluß, aktivierte Merkmale: Ruhe vor dem Telefon".
Auf diese Weise erfährt die eine Prüfung durchführende Person in kurzer Zeit und klarer Form alle den betreffenden Teilnehmeranschluß TA betreffenden Angaben. Bei dieser Gelegenheit werden gleichzeitig auch diejenigen Teile der zentralen Steuerung ZST geprüft, die sich mit der Identifizierung einer Teilnehmerrufnummer und den Berechtigungen sowie den eingespeicherten Merkmalen für diesen Teilnehmeranschluß TA befassen. Nach Beendigung der Ansage, nämlich dann, wenn alle der Ansageeinrichtung ANSE mitgeteilten Informationen sprachlich ausgegeben sind, gibt die Ansageeinrichtung ANSE ein Auslösekriterium AUS an die Verbindungsübertragung VUe. Daraufhin wird die Verbindung getrennt, so daß bei durchgreifender Auslösung innerhalb der Fernsprechvermittlungsanlage am Fernsprechapparat des Teilnehmeranschlusses TA das Besetztzeichen zu hören ist.

Wird daraufhin der Handapparat aufgelegt, so wird dies in der zentralen Steuerung ZST erkannt, und daraufhin sofort eine Rückwärtsverbindung zu dem betreffenden Teilnehmeranschluß TA aufgebaut. Dies geschieht deshalb, weil zuvor eine Prüfverbindung mit dem betreffenden Teilnehmeranschluß TA bestanden hat. Dabei gerät der betreffende Teilnehmeranschluß TA in den Rufzustand, so daß überprüft werden kann, ob die Aussendung des Rufstroms, der Rufempfang und das Anruforgan im Fernsprechapparat ordnungsgemäß funktionieren. Nach Abheben des Handapparats wird die Sprechverbindung hergestellt, wobei von der Ansageeinrichtung ANSE mit einem vorbestimmten Ansagetext das Ende des Prüfvorgangs bekanntgegeben wird.

Unmittelbar anschließend an einen derartigen Prüfvorgang kann der nächste Teilnehmeranschluß TA in gleicher oder ähnnlicher Weise geprüft werden. Während des Prüfvorgangs ist es außerdem möglich, einzelne Ziffern nachzuwählen oder Funktionstasten zu betätigen, deren einzelne Bedeutung dann von der Ansageeinrichtung ANSE mit der entsprechenden Bezeichnung quittiert wird. Beim Wählen von Ziffern ist es dabei gleichgültig, ob diese mit dem Nummernschalter oder per Tastatur eingegeben werden. Wird beispielsweise die Ziffer 5 gewählt, so antwortet die Ansageeinrichtung ANSE mit dem Wort "Fünf". In gleicher Weise werden die Funktionstastendrücke beispielsweise mit den Worten "Stern" oder "Raute" oder "Aufschalten" beantwortet.

Die Ansageeinrichtung ANSE kann außerdem so eingestellt sein, daß beim Nachwählen von zwei gleichen Ziffern gezielt nachgefragt werden kann, ob ein diesen Ziffern zugeordnetes Merkmal für den betreffenden Teilnehmeranschluß TA aktiviert ist. Da während eines Prüfvorgangs alle dem Teilnehmeranschluß TA zugeordneten Merkmale in die Ansageeinrichtung ANSE übertragen worden sind, können durch die Nachwahl dort befindliche Speicher gezielt angesteuert werden. Ein solcher Vorgang wird beispielsweise eingeleitet durch das Wählen der Ziffern 33. Daraufhin antwortet die Ansageeinrichtung ANSE zunächst mit dem Wort "Drei" und sodann, wenn die Ziffer drei zum zweiten Mal gewählt wird, mit dem Wort "aufschalteberechtigt".

Es ist außerdem möglich, durch Nachwahl zu bewirken, daß die gesamte Sprachansage mehrmals wiederholt wird. Dies könnte beispielsweise erforderlich werden, wenn eine Sprachansage nicht richtig verstanden worden ist.

Da erfindungsgemäße Prüfverfahren eigenet sich insbesondere zur Prüfung von Teilnehmeranschlüssen TA, wenn Fernsprechvermittlungsanlagen neu eingeschaltet werden sollen. Dabei war es bisher oft erforderlich, daß mindestens zwei Personen sich gegenseitig von verschiedenen Anschlüssen aus anrufen und durch Ausprobieren oder Nachkontrollieren feststellen mußten, ob die für einen Teilnehmeranschluß TA vorzusehenden Merkmale und Berechtigungen richtig eingestellt sind. Mit dem hier beschriebenen Prüfverfahren ist es möglich, daß eine derartige Prüfung von einer einzigen Person vorgenommen werden kann.

**Patentansprüche**

1. Verfahren zur Prüfung von Fernsprechapparaten, Leitungswegen und Teilen der Steuerung von Fernsprechvermittlungsanlagen, insbesondere Fernsprechnebenstellenanlagen mit zentraler Steuerung, Identifizierungseinrichtung und teinehmerindividuell einrichtbaren Merkmalen, wobei Prüfverbindungen zu einer zentralen Stelle aufgebaut und dabei die gewählten Ziffern ausgewertet werden, dadurch gekennzeichnet, daß von jedem Teilnehmerapparat aus mit dem Betätigen einer Funktionstaste (T) eine Verbindung zu einer Verbindungsübertragung (VUe) mit nachgeschalteter Ansageeinrichtung (ANSE) hergestellt wird, wobei von der zentralen Steuerung (ZST) aus die Anschlußdaten des Teilnehmeranschlusses (TA), wie Rufnummer, Wahlverfahren, Berechtigungen, Zielrufnummern etc. über die Verbindungsübertragung (VUe) in die Ansageeinrichtung (ANSE) übertragen werden, daß die Ansageeinrichtung (ANSE) daraus einen Ansagetext generiert, worin die Anschlußdaten enthalten sind und diesen über die aufgebaute Verbindung zu dem betreffenden Teilnehmer sendet, daß nachträglich gewählte Ziffern und andere abgegebene Kennzeichen einzeln zur Ansageeinrichtung (ANSE) gelangen und ihre Bedeutung direkt sprachlich ausgegeben werden, daß nach Ende der Ansage die Verbindung ausgelöst wird und nach dem Auflegen des Handapparates am Teilnehmerapparat automatisch sofort eine neue Verbindung aufgebaut wird, wobei der Teilnehmeranschluß (TA) angerufen wird, und daß beim Wiederabnehmen des Handapparates mit einer Ansage das Ende des Prüfvorgangs bekannt gegeben wird.

2. Verfahren nach Anspruch 1, dadurch gekennzeichnet, daß durch mehrmaliges Nachwählen gleicher Ziffern das Vorhandensein von Teilnehmer-Merkmalen gezielt abfragbar ist.

3. Verfahren nach Anspruch 1, dadurch gekennzeichnet, daß die Sprachansage mehrmals wiederholt werden kann, wenn dies vom Teilnehmerapparat durch Nachwählen gesteuert wird.

4. Verfahren nach Anspruch 1, dadurch gekennzeichnet, daß die Ansageeinrichtung (ANSE) vierdrähtig an die Verbindungsübertragung (VUe) angeschlossen ist.

5. Verfahren nach Anspruch 1, dadurch gekennzeichnet, daß zur Übermittlung der Anschlußdaten und der gewählten Ziffern von der Verbindungsübertragung (VUe) zur Ansageeinrichtung (ANSE) eine Sendeeinrichtung (S) und eine Empfangseinrichtung (E) vorgesehen sind, die nach dem für Tastwahl eingesetzten Mehrfrequenzverfahren (MFV) arbeiten und die Daten der Ansageeinrichtung (ANSE) wortparallel anbieten.

6. Verfahren nach Anspruch 1, dadurch gekennzeichnet, daß die Ansageeinrichtung (ANSE) ein Sprachsynthesesteuerung (SSY,SSE) enthält, womit künstliche Sprache erzeugt wird.

**Claims**

1. Method for the testing of telephone instruments, line paths and parts of the control of telephone exchange installations, in particular private branch telephone exchange installations with central control, identification equipment and features arrangeable individually for subscribers, wherein test connections are established to a central point and the dial led numbers are evaluated in that case, characterised thereby, that a connection to a connection repeater (VUe) with downstream announcing equipment (ANSE) is produced by each subscriber set by the actuation of a function key (T), wherein the connection data of the subscriber connection (TA), such as telephone number, dialling method, authorisations, called numbers and so forth are transmitted from the central control (ZST) by way of the connection repeater (VUe) into the announcing equipment (ANSE), that the announcing equipment (ANSE) generates an announcement text from this, in which the connection data are contained and transmits this by way of the established connection to the subscriber concerned, that dial led numbers and other issued identifications subsequently get individually to the announcing equipment (ANSE) and their significance is issued directly in speech, that the connection is released after the end of the announcement and a new connection is immediately automatically established after the handset is put down at the subscriber set, for which the subscriber connection (TA) is called and that the end of the test operation is made known by an announcement on the handset being picked up again.

2. Method according to claim 1, characterised thereby, that the presence of subscriber features is interrogatable in targeted manner by repeated post-selection of like numbers.

3. Method according to claim 1, characterised thereby, that the speech announcement can be repeated several times when this is controlled by post-selection from the subscriber set.

4. Method according to claim 1, characterised thereby, that the announcing equipment (ANSE) is connected by a four-wire line to the connection repeater (VUe).

5. Method according to claim 1, characterised thereby, that for the transmission of the connection data and the dialled numbers from the connection repeater (VUe) to the announcing equipment (ANSE), a transmitter equipment (S) and a receiver equipment (E) are provided, which operate on the multi-frequency method (MFV) used for key dialling and offer the data in parallel words to the announcing equipment (ANSE).

6. Method according to claim 1, characterised thereby, that the announcing equipment (ANSE) contains a speech synthesis control (SSY, SSE), by which artificial speech is produced.

**Revendications**

1. Méthode pour tester des appareils téléphoniques, des voies de ligne et des parties de la commande de centraux téléphoniques, en particulier de centraux téléphoniques privés avec commande centrale, dispositif d'identification et services accessibles individuellement par les abonnés, méthode selon laquelle les liaisons de test sont établies avec une station centrale et selon laquelle les chiffres formés sont évalués, caractérisée en ce que, à partir de chaque poste téléphonique d'abonné, par l'action d'une touche de fonction (T), une liaison est réalisée avec un dispositif de transmission de liaison (VUe) connecté à un dispositif d'annonce (ANSE), les données de la ligne de raccordement (TA) de l'abonné, telles que numéro d'appel, procédé de sélection, comptage, numéro d'appel du destinataire etc, étant transmises de la commande centrale (ZST) au dispositif d'annonce (ANSE) par l'intermédiaire du dispositif de transmission de liaison (VUe), en ce que le dispositif d'annonce (ANSE) génère ensuite un texte d'annonce qui contient les données de la ligne de raccordement et transmet ce texte d'annonce à l'abonné concerné par l'intermédiaire de la liaison établie, en ce que les chiffres composés ensuite et d'autres signes donnés sont reçus individuellement dans le dispositif d'annonce où leur signification se trouve directement donnée oralement, en ce que la liaison est libérée à la fin de l'annonce et, dès que le combiné se trouve raccroché sur le poste d'abonné, une nouvelle liaison est automatiquement établie, la ligne d'abonné (TA) étant alors appelée, et en ce que lorsque le combiné se trouve de nouveau décroché, une annonce informe la ligne d'abonné de la fin du processus de test.

2. Méthode selon la revendication 1, caractérisée en ce que la fourniture de services à l'abonné est demandée par sélection répétée de mêmes chiffres.

3. Méthode selon la revendication 1, caractérisée en ce que l'annonce verbale peut être répétée plusieurs fois en réponse à une sélection effectuée sur le poste d'abonné.

4. Méthode selon la revendication 1, caractérisée en ce que le dispositif d'annonce (ANSE) est connecté au dispositif de transmission de la liaison (VUe) au moyen de quatre fils.

5. Méthode selon la revendication 1, caractérisée en ce qu'un dispositif d'émission (S) et un dispositif de réception (E) sont prévus pour la transmission des données de ligne de raccordement et des chiffres composés entre le dispositif de transmission de la liaison (VUe) et le dispositif d'annonce (ANSE), les dispositifs d'émission et de réception précités travaillant selon le procédé multifréquences (MFV) pour la sélection et présentant les données au dispositif d'annonce (ANSE) en parallèle par mots.

6. Méthode selon la revendication 1, caractérisée en ce que le dispositif d'annonce (ANSE) comprend un synthétiseur de parole (SSY, SSE) par lequel la parole est générée artificiellement.